# EUROPÄISCHE PATENTANMELDUNG

(11) **EP 1 354 511 A1**
(43) Veröffentlichungstag der Anmeldung: **22.10.2003**
(21) Anmeldenummer: 03008451.1
(22) Anmeldetag: 11.04.2003
(51) Int. Cl.: A01K 11/00

(54) **Ohrmarke zur Kennzeichnung von Nutztieren**

(30) Priorität: 19.04.2002 DE 10217497; 17.01.2003 DE 10301908
(71) Anmelder: Brodmann, Ralf, 88356 Ostrach-Burgweiler (DE)
(72) Erfinder: Brodmann, Ralf, 88356 Ostrach-Burgweiler (DE)
(74) Vertreter: Weiss, Peter, Dr.

(57) **Zusammenfassung**

Bei einer Ohrmarke zur Kennzeichnung von Nutztieren, aus einem Oberteil (1) und einem Unterteil (4), die miteinander verbindbar sind, soll das Oberteil (1) über ein separates Mittelteil (5) mit dem Unterteil (4) verbindbar ist.

## Beschreibung

Die Erfindung betrifft eine Ohrmarke zur Kennzeichnung von Nutztieren, aus einem Oberteil und einem Unterteil, die miteinander verbindbar sind.

Derartige Ohrmarken sind in vielfältiger Form und Ausführung im Markt bekannt und erhältlich. Insbesondere in landwirtschaftlichen Betrieben mit Rind- und Schweinezüchtung bzw. -mast, müssen Tiere mit entsprechenden Kennzeichnungen versehen werden. Bekannt ist, dass zweiteilige Ohrmarken eingesetzt werden, die aus einem Dornstück und einer Gegenplatte gebildet sind. Dabei schliesst an ein Dornstück eine Kunststoffplatte an, wobei der spitze Dorn dem Durchstossen des Tierohres dient. Nach dem Durchstossen des Dornstückes durch ein Tierohr wird auf der anderen Seite eine Gegenplatte als Unterteil zum Halten der Ohrmarke auf den Dorn aufgeclipst. Dieses Gegenstück, welches ebenfalls als Kunststoffplatte ausgebildet ist, bildet zusätzlich einen zylindrischen Bereich zur Aufnahme und zur Arretierung der Dornspitze, was nachteilig ist. Insbesondere an diesen zylindrischen Bereichen kann das Tier, beispielsweise bei Ästen oder Gräsern hängen bleiben und sich verletzen. Häufig können auch entsprechende Ohrmarken mit Transpondern versehen sein, die auf die entsprechenden Kunststoffplatten aufgesetzt sind, wobei häufig auch beispielsweise bei der Schweinemast Ferkeln diese Transponder mit Ohrmarken aus dem Ohr gerissen werden. Ferner geschieht das Anbringen von Ohrmarken an Tierohren meist mittels handbetätigten Zangen. Diese sind nicht für Ohrmarkentacker geeignet, um automatisiert die Ohrmarken an Tierohren festzulegen. Insbesondere durch die Verbindung von Ohrmarkentackern lässt sich wesentlich Zeit beim Anbringen von Ohrmarken an Tierohren einsparen, wobei zusätzlich ein schmerzfreies Einziehen von Ohrmarken gewährleistet ist. Allerdings sind die herkömmlichen Ohrmarken nicht zur Automatisierung in hohen Stückzahlen geeignet.

Der vorliegenden Erfindung liegt daher die Aufgabe zugrunde, eine Ohrmarke der eingangs genannten Art zu schaffen, welche die genannten Nachteile beseitigt und mit welcher auf einfache und kostengünstige Weise eine Verbindung am Ohr des Tieres optimiert wird. Die Verletzungsgefahr des Tieres soll zudem wesentlich vermindert werden. Zudem sollen eine Vielzahl von Ohrmarken in Magazinen eines Ohrtackers eingesetzt werden können und ein schnelles Einziehen der Ohrmarken mit Ohrmarkentackern soll durch schnelles Magazinieren im Stall wesentlich vereinfacht werden. Ferner sollen Datenträger, Transponder oder Sensor an Ohrmarken vor Störungen besser geschützt werden.

Zur Lösung dieser Aufgabe führen die Merkmale der nebengeordneten Patentansprüche 1 und 2.

Bei der vorliegenden Erfindung ist eine Ohrmarke geschaffen, die im wesentlichen dreiteilig ausgebildet ist. Sie besteht im wesentlichen aus einem flachen, insbesondere flächigen Oberteil und Unterteil, welches jeweils mit einem Durchbruch bzw. einer Öffnung versehen ist. Zwischen Oberteil und Unterteil wird ein Mittelteil eingesetzt, wobei Oberteil und Unterteil jeweils endseits, vorzugsweise in zumindest teilweise umlaufenden Einkerbungen rastbar eingesetzt wird.

Da Oberteil und Unterteil vorzugsweise aus Kunststoff hergestellt sind und in etwa formgleich ausgebildet sind, lassen sich Oberteil und Unterteil sehr leicht und in hohen Stückzahlen, da diese sehr flach gehalten sind, magazinieren.

Ähnliches gilt für das Mittelteil, welches im wesentlichen zylindrisch ausgebildet ist und vorzugsweise eine Durchgangsbohrung oder eine Mehrzahl von Sacklöchern aufweist. Einends kann an dem Mittelteil eine Anlagefläche ausgeformt sein, wobei andernends stirnseitig in das Mittelteil eine Einstechspitze eingesetzt ist. Vorzugsweise ist innerhalb des Mittelteiles der Datenträger vorgesehen, der gleichzeitig als Stössel dienen kann. Bei der vorliegenden Erfindung hat sich als besonders vorteilhaft erwiesen, insbesondere das Mittelteil aufzuweiten, um nach dem Einsetzen in ein Ohr eine Verbindung zwischen Oberteil und Unterteil durch Aufweiten herzustellen, die hochfest ist.

Dabei kann beispielsweise im Oberteil und Unterteil eine Einlage aus Metall vorgesehen sein, dessen Durchbruch bzw. Durchmesser grösser ist als der Durchbruch des Oberteiles 1 bzw. Unterteiles selbst.

Durch Aufweiten des Mittelteiles, beispielsweise mittels eines Aufweitdornes oder mittels eines Stössels, der das Mittelteil aufspreizt, wird eine feste mechanische Verbindung zwischen Oberteil, Unterteil und Mittelteil in den jeweiligen endseitigen Bereichen im Bereich der Einkerbungen hergestellt, so dass die Ohrmarke am Tierohr festgelegt ist. Es hat sich ferner als vorteilhaft erwiesen, dass mittels des Stössels ein Aufweiten des Mittelteiles erfolgt und ein gleichzeitiges Ausstossen der Einstechspitze aus dem Mittelteil gewährleistet wird, so dass eine Verletzungsgefahr durch diese vermieden wird. Insgesamt wird hierdurch eine Ohrmarke geschaffen, die aus sehr flach ausgebildeten Oberteilen und Unterteilen gebildet ist, wobei nach aussen hin keine Überstände, zylindrische Erhebungen, Spitzen od. dgl. abragen, so dass insgesamt eine Verletzungsgefahr vermieden wird.

Durch die sehr flach ausgebildeten Oberteile und Unterteile lassen diese sich sehr leicht in einem Ohrmarkentacker magazinieren, gleiches gilt für das sehr zylindrisch und klein ausgebildete Mittelteil.

Auf diese Weise lässt sich auch ein Magazin eines Ohrmarkentackers und einer Vielzahl von Oberteilen und Unterteilen sowie Mittelteilen füllen bzw. auch schnell im Stall nachladen.

Bei einem anderen Ausführungsbeispiel der vorliegenden Erfindung können auch Endbereiche, insbesondere Nietbereiche des Mittelteiles beim Einsetzen in das Tierohr umgebördelt oder umgenietet werden, so dass eine formschlüssige Verbindung hergestellt wird. Dabei hat sich als vorteilhaft erwiesen, dass insbesondere im Inneren des Mittelteiles einen Sender vorzusehen, der von aussen geschützt ist.

Weitere Vorteile, Merkmale und Einzelheiten der Erfindung ergeben sich aus der nachfolgenden Beschreibung bevorzugter Ausführungsbeispiel sowie anhand der Zeichnung; diese zeigt in
Figur 1a eine schematisch dargestellte Ansicht auf eine Ohrmarke, bestehend aus Oberteil, Mittelteil und Unterteil;
Figur 1b einen schematisch dargestellten Querschnitt durch eine Ohrmarke, eingesetzt in ein Tierohr;
Figuren 2a bis 2c schematisch dargestellte Querschnitte durch ein weiteres Ausführungsbeispiel einer weiteren Ohrmarke;
Figuren 3a bis 3d eine Abfolge zum Automatisierten Einbringen einer Ohrmarke in ein Tierohr.

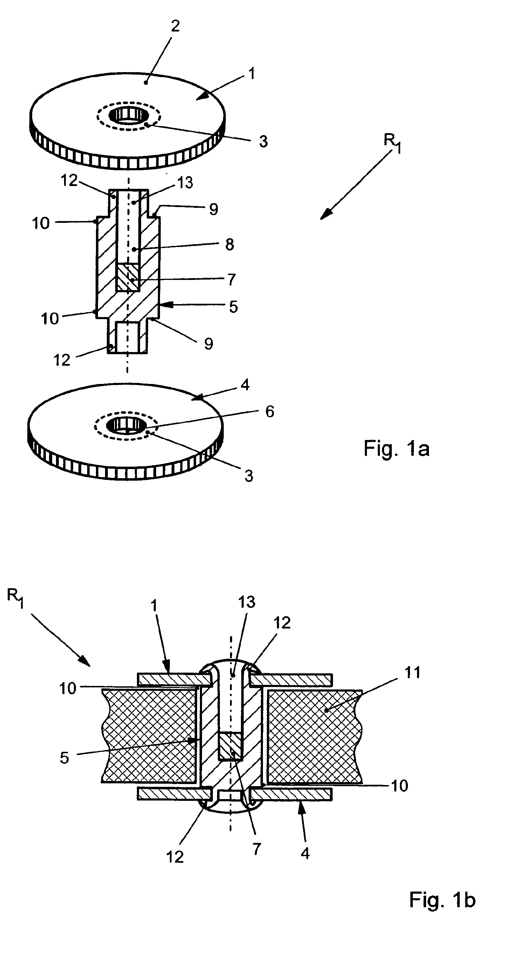

Gemäss Figur 1a weist eine Ohrmarke R₁ ein glattes, flächiges Oberteil 1 aus etwa 1 bis 2 mm dickem, flexiblen Kunststoff auf, welches vorzugsweise mittig mit einem Durchbruch 2 versehen ist, der ggf. mit einer Einlage 3 umgeben ist. Die Einlage 3 kann in die Fläche des Oberteiles 1 eingebettet sein. Die vorliegende Erfindung sei jedoch hierauf nicht beschränkt. Auf die Einlage 3 kann ggf. verzichtet werden. Dabei ist der Durchbruch der Einlage 3 entweder etwas grösser als derjenige des flächigen Oberteiles 1 oder weist eine entsprechende Elastizität zum Durchstossen durch ein Mittelteil 5 auf.

Das Oberteil 1 ist vorzugsweise rund ausgebildet und weist einen Durchmesser von etwa 10 mm bis 40 mm, vorzugsweise 20 mm auf. Vorzugsweise ist das Unterteil 4 identisch zum Oberteil 1 aufgebaut, hat jedoch im vorliegenden Ausführungsbeispiel einen Durchbruch 6, der einen etwas kleineren Durchmesser aufweist.

Bevorzugt ist das Mittelteil 5 zylindrisch ausgebildet und kann aus Kunststoff, Metall, insbesondere nicht rostendem Metall hergestellt sein. Vorzugsweise ist es innen hohl ausgebildet oder weist zumindest endseits zwei Sacklöcher 13 auf. In zumindest ein Sackloch 13 lässt sich ein Datenträger 7, als Transponder, Sender oder Chip ausgildet, einsetzen. Ein zylindrischer Freiraum 8 im Sackloch 13 dient der Aufnahme des Datenträgers 7 und/oder auch der Führung eines hier nicht näher dargestellten Dornes eines Ohrmarkentackers, beim Einziehen der Ohrmarken.

Um eine Ohrmarke R₁ an ein Tierohr 11, insbesondere durch einen Ohrknorpel 11 des Tieres anzubringen, wird das Mittelstück 5 durch den Ohrknorpel des Tierohres 11 gestochen, jeweils beiseitig werden Oberteil 1 und Unterteil 4 auf jeweilige Nietbereiche 12 des Mittelteiles 5 aufgesetzt, so dass die das Oberteil 1 und Unterteil 4 an zylindrischen Endstücken 9 anliegen. Anschliessend wird ein überragendes Ende des Mittelteiles 5 jeweils endseitig, wie es beispielsweise in Figur 1b dargestellt ist, durch Nieten umgebördelt und hält auf diese Weise die Ohrmarke R₁, insbesondere Oberteil 1 und Unterteil 4 am Mittelteil 5 fest bzw. verbindet dieses formschlüssig.

Durch entsprechende Bundstellen 10 bzw. über eine entsprechende Länge des Mittelteiles 5, die eine Dicke des Tierohres überschreitet, wird ein erforderlicher Freiraum für das Tierohr 11 gewährleistet, so dass die Ohrmarke R₁ locker am Tierohr 11, insbesondere im Ohrknorpel sitzt.

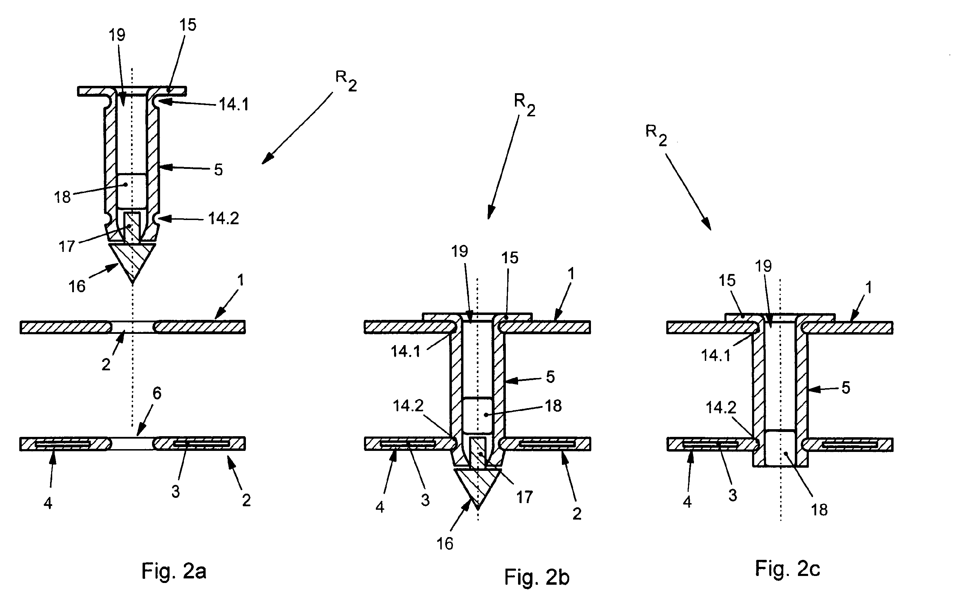

In dem bevorzugten Ausführungsbeispiel der vorliegenden Erfindung gemäss Figur 2a ist eine Ohrmarke R₂ aufgezeigt, die im wesentlichen dreiteilig aus einem flächigen Oberteil 1, Unterteil 4 und einem Mittelteil 5 gebildet ist. Bevorzugt ist das Mittelteil 5 innen hohl ausgebildet und weist radiale, vorzugsweise jeweils endseits vorgesehene Einkerbungen 14.1, 14.2 auf.

Einends, insbesondere im Bereich der Einkerbung 14.1 ist das Mittelteil 5 mit einer Anlagefläche 15 versehen.

Andernends, insbesondere im Bereich der Einkerbung 14.2 ist stirnseitig eine Einstechspitze 16 mittels einer Welle 17 stirnseitig in das Mittelteil 5 eingesteckt und wird lediglich darin eingespannt gehalten. Dabei passt sich die äussere Kontur und Form der Einsteckspitze 16 der äusseren Kontur des Mittelteiles 5, insbesondere im endseitigen Bereich nahe der Einkerbung 14.2 an.

Die Oberteile 1 und Unterteile 2 entsprechen in etwa der oben beschriebenen Art. Sie können ggf. mit einer hier nicht dargestellten Einlage 3 versehen sein, es kann jedoch auf die Einlage 3 verzichtet werden. Hierauf sei die Erfindung nicht beschränkt. Wichtig ist bei der vorliegenden Erfindung, dass das Mittelteil, welches mit der Einsteckspitze 16 versehen ist, wie es insbesondere in Figur 2a dargestellt ist, noch zusätzlich einen Stössel 18 aufweist, der ggf. als Datenträger 7, Transponder od. dgl. ausgebildet sein kann. Der Stössel 18 sitzt innen in einer Bohrung 19 des Mittelteiles bevorzugt reibschlüssig fest und befindet sich unmittelbar im Anschluss der Welle 17 der Einstechspitze 16.

Die Funktionsweise der vorliegenden Erfindung ist folgende:

Bei der vorliegenden Erfindung wird manuell oder mittels eines Ohrmarkentackers das Oberteil 1 auf ein Tierohr 11 aufgelegt, anschliessend das Mittelteil 5 durch den Durchbruch 2 des Oberteils 1 und durch den Ohrknorpel des Tierohres 11 gezogen, wobei das Oberteil 1 durch entweder elastisches Verformen des Oberteiles 1 oder des Mittelteiles 5 nach dem Durchstechen des Tierohres 11 in die Einkerbung 14.1 einrastet und zusätzlich von der Auflagefläche 15 nach aussen gesichert ist. Andernends im Bereich der Einkerbung 14.2 wird nach dem Durchstechen das Unterteil 4 auf das Mittelteil aufgebracht, wobei das Unterteil 4 in die Einkerbung 14.2 des Mittelteiles 5, siehe Figur 2b, einrastet.

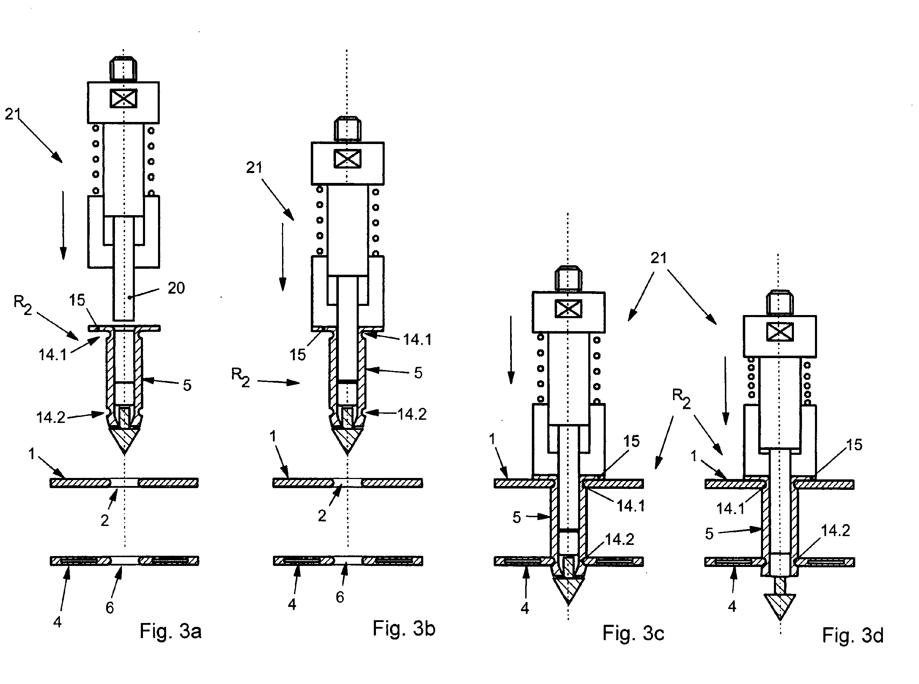

Um eine Verbindung zwischen Unterteil 4 und Mittelteil 5 zu verbessern und ggf. die Einstechspitze 16 aus dem Mittelteil 5 zu lösen, wird in die Bohrung 19 ein Dorn 20 eines hier nur angedeuteten Ohrmarkentackers 21 eingeführt und drückt den Stössel 18 gegen das stirnseitige Ende des Mittelteiles in den Bereich der Einkerbung 14.2. Da insbesondere innen die Bohrung 19 im stirnseitigen Bereich der Einkerbung 14.2 verjüngt ausgebildet ist, spreizt sich das Mittelteil im Bereich der Einkerbung 14.2 auf, wobei hierdurch eine formschlüssige und feste Verbindung zwischen dem Mittelteil 5 und dem Unterteil 4 im Bereich der Einkerbung 14.2, siehe Figur 2c und 3d, gebildet wird. Die Einstechspitze 16 wird dabei über dessen Welle 17 aus der Bohrung 19 bzw. aus dem Mittelteil 5 herausgestossen, so dass eine Ohrmarke R₂ geschaffen ist, die ohne Einstechspitze 16 am Tierohr 11 festgelegt ist, so dass eine Verletzungsgefahr für das Tier vermieden ist.

Im Rahmen der vorliegenden Erfindung soll jedoch auch liegen, dass beispielsweise das Mittelteil aus einem plastisch verformbaren Material, Kunststoff, Metall oder Verbundwerkstoff hergestellt ist und lediglich beispielsweise der Dorn 20 als Aufweitdorn ausgebildet ist und das als Hülse ausgebildete Mittelteil 5 nach dem Durchstecken plastisch verformt, insbesondere erweitert, so dass eine formschlüssige Verbindung zwischen dem Oberteil 1 und der Einkerbung 14.1 bzw. Unterteil 4 und der Einkerbung 14.2 hergestellt ist.

Dabei hat sich ferner als besonders vorteilhaft erwiesen, dass Oberteil 1 und Unterteil 4 als flächige Elemente ausgebildet sein können, so dass eine Ohrmarke R₁, R₂ gebildet wird, die sehr flach ist, um insbesondere eine Verletzungsgefahr, beispielsweise durch Hängenbleiben, durch Abstehen vom Ohr od. dgl. zu minimieren.

Wie es insbesondere aus den Figuren 3a bis 3d hervorgeht, kann die Ohrmarke R₂ sehr leicht maschinell mittels einem hier nur angedeuteten Ohrmarkentacker 21 an einem Tierohr festgelegt werden. Dabei sind vorzugsweise Oberteil 1 und Unterteil 4 gleich ausgebildet und lassen sich leicht, da sie auch als ebene Scheiben od. dgl. ausgebildet sind, magazinieren. Gleiches gilt für das Mittelteil 5.

Ferner soll auch im Rahmen der vorliegenden Erfindung liegen, dass beispielsweise lediglich die Oberteile 1 und Unterteile 4 aus elastisch verformbaren Materialen gebildet sind und sich über das Mittelteil 5 in die jeweiligen Einrastungen 14.1, 14.2 ziehen lassen. Durch die Elastizität von Oberteil 1 und Unterteil 4 kann eine formschlüssige Verbindung zum Mittelteil 5 gewährleistet sein. Auch dies soll im Rahmen der vorliegenden Erfindung liegen.

### Positionszahlenliste

| | | | | | |
|---|---|---|---|---|---|
| 1 | Oberteil | 34 | | 67 | |
| 2 | Durchbruch | 35 | | 68 | |
| 3 | Einlage | 36 | | 69 | |
| 4 | Unterteil | 37 | | 70 | |
| 5 | Mittelteil | 38 | | 71 | |
| 6 | Durchbruch | 39 | | 72 | |
| 7 | Datenträger | 40 | | 73 | |
| 8 | Freiraum | 41 | | 74 | |
| 9 | Endstück | 42 | | 75 | |
| 10 | Bundstelle | 43 | | 76 | |
| 11 | Ohrknorpel/Tierohr | 44 | | 77 | |
| 12 | Nietbereich | 45 | | 78 | |
| 13 | Sackloch | 46 | | 79 | |
| 14 | Einkerbung | 47 | | | |
| 15 | Anlagefläche | 48 | | | |
| 16 | Einsteckspitze | 49 | | | |
| 17 | Welle | 50 | | | |
| 18 | Stössel | 51 | | R₁ | Ohrmarke |
| 19 | Bohrung | 52 | | R₂ | Ohrmarke |
| 20 | Dorn | 53 | | | |
| 21 | Ohrmarkentacker | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Ohrmarke zur Kennzeichnung von Nutztieren, aus einem Oberteil (1) und einem Unterteil (4), die miteinander verbindbar sind,
**dadurch gekennzeichnet,**
**dass** das Oberteil (1) über ein separates Mittelteil (5) mit dem Unterteil (4) verbindbar ist.

2. Ohrmarke zur Kennzeichnung von Nutztieren, aus einem Oberteil (1) und einem Unterteil (4), die miteinander verbindbar sind, **dadurch gekennzeichnet, dass** Oberteil (1) und Unterteil (4) flächig ausgebildet sind und über ein separates Mittelteil (5) zueinander beabstandet miteinander verbindbar sind.

3. Ohrmarke nach Anspruch 1 oder 2, **dadurch gekennzeichnet, dass** Oberteil (1) und Unterteil (4) jeweils einen Durchbruch (2, 6) aufweisen.

4. Ohrmarke nach wenigstens einem der Ansprüche 1 bis 3, **dadurch gekennzeichnet, dass** das Mittelteil (5) im wesentlichen zylindrisch ausgebildet ist und ggf. einen Datenträger (7), insbesondere Sender, Transponder od. dgl. trägt.

5. Ohrmarke nach Anspruch 4, **dadurch gekennzeichnet, dass** im Mittelteil (5) ein Sackloch (13) aufweist, in welches der Datenträger (7) fixiert eingesetzt ist.

6. Ohrmarke nach wenigstens einem der Ansprüche 1 bis 5, **dadurch gekennzeichnet, dass** das Mittelteil (5) jeweils endseits als Wellenabsätze mit stirnseitigen Stützflächen (9) aufweist, wobei daran als Absatz hohlwellenartige Nietbereiche (12) anschliessen, wobei die Durchbrüche (2 und 6) von Oberteil (1) und Unterteil (4) in etwa die gleichen Durchmesser, wie die Nietbereiche (12) des Mittelteils (5) aufweisen.

7. Ohrmarke nach wenigstens einem der Ansprüche 1 bis 6, **dadurch gekennzeichnet, dass** Oberteil (1) und Unterteil (4) aus etwa 0,5 mm bis 4 mm dicken und flachen Kunststoffelementen, Kunststoffplatten, Kunststoffscheiben od. dgl. ohne wesentliche Erhebungen gebildet sind.

8. Ohrmarke nach wenigstens einem der Ansprüche 1 bis 7, **dadurch gekennzeichnet, dass** das Mittelteil (5) ein Tierohr (11), insbesondere einen Ohrknorpel eines Nutztieres durchgreift und jeweils beidseitig nach dem Einbringen bzw. Durchstossen des Mittelteils (5) durch das Tierohr (11) Oberteil (1) und Unterteil (4) auf die jeweiligen endseitigen Nietbereiche (12) des Mittelteiles (5) aufsteckbar sind, wobei die Nietbereiche (12) anschliessend zum festen Verbindung von Oberteil (1) und Unterteil (4) mit dem Mittelteil (5) verformbar sind.

9. Ohrmarke nach wenigstens einem der Ansprüche 1 bis 8, **dadurch gekennzeichnet, dass** Oberteil (1) und Unterteil (4) ggf. zum leichten Lagern, insbesondere zum automatisierten Festlegen am Tierohr (11) in etwa gleich oder ähnlich ausgeformt sind.

10. Ohrmarke nach wenigstens einem der Ansprüche 1 bis 9, **dadurch gekennzeichnet, dass** zum Automatisierten Einbringen des Mittelteiles (5) in das Tierohr (11) diese jeweils bandartig zusammenhängend miteinander verbunden sind oder magazinartig zusammenfassbar sind.

11. Ohrmarke nach wenigstens einem der Ansprüche 1 bis 10, **dadurch gekennzeichnet, dass** das Oberteil (1), das Mittelteil (5) und das Unterteil (4) in elektrisch, mechanisch und/oder pneumatisch betriebenen Ohrmarkentackern in grossen Stückzahlen magaziniert an Nutztiere anbringbar sind.

12. Ohrmarke nach wenigstens einem der Ansprüche 1 bis 11, **dadurch gekennzeichnet, dass** das Mittelteil (5) als Datenträger (7), insbesondere als Sender, ggf. mit einer Antenne versehen ausgebildet ist.

13. Ohrmarke nach wenigstens einem der Ansprüche 1 bis 12, **dadurch gekennzeichnet, dass** im Bereich des Durchbruches (2) des Oberteiles (1) bzw. des Durchbruches (6) des Unterteiles (4) ggf. eine Einlage (3) vorgesehen ist, die ggf. als Antenne für den Datenträger (7) bzw. Sender ausgebildet ist.

14. Ohrmarke nach wenigstens einem der Ansprüche 1 bis 13, **dadurch gekennzeichnet, dass** das Mittelteil (5) in endseitigen Bereichen zumindest eine teilweise umlaufende radiale Einkerbung (14.1, 14.2) aufweist.

15. Ohrmarke nach Anspruch 14, **dadurch gekennzeichnet, dass** der Durchmesser des Durchbruches (2) des Oberteiles (1) in etwa der Einkerbung (14.1) entspricht.

16. Ohrmarke nach Anspruch 14, **dadurch gekennzeichnet, dass** der Durchmesser des Durchbruches (6) des Unterteiles (4) in etwa dem Durchmesser der Einkerbung (14.2) des Mittelteiles (5) entspricht.

17. Ohrmarke nach wenigstens einem der Ansprüche 1 bis 16, **dadurch gekennzeichnet, dass** das Mittelteil (5) als Hülse ausgebildet ist, welche endseits der Einkerbung (14.1) eine nach aussen erweiterte Anlagefläche (15) ausbildet.

18. Ohrmarke nach wenigstens einem der Ansprüche 1 bis 17, **dadurch gekennzeichnet, dass** das Mittelteil (5) innen hohl ausgebildet ist und einends im Bereich der Einkerbung (14.2) stirnseitig eine Einsteckspitze (16) aufweist, die welche endseits über eine Welle (17) in das Mittelteil (5) eingreift und darüber gehalten ist.

19. Ohrmarke nach wenigstens einem der Ansprüche 1 bis 18, **dadurch gekennzeichnet, dass** Oberteil (1) und/oder Unterteil (4) aus einem elastisch verformbaren Material, insbesondere Kunststoffmaterial hergestellt ist.

20. Ohrmarke nach wenigstens einem der Ansprüche 1 bis 19, **dadurch gekennzeichnet, dass** ein Durchmesser des Durchbruches (2, 6) in etwa dem Durchmesser des Mittelteiles (5) oder dessen Einkerbungen (14.1, 14.2) entspricht.

21. Ohrmarke nach wenigstens einem der Ansprüche 1 bis 20, **dadurch gekennzeichnet, dass** durch Aufspreizen oder Aufweiten des Mittelteiles (5) und/oder durch plastisches Verformen des Mittelteils (5) das Oberteil (1) im Bereich der Einkerbung (14.1) und das Unterteil (4) im Bereich der Einkerbung (14.2) fest mit diesem verbindbar ist.

22. Ohrmarke nach wenigstens einem der Ansprüche 1 bis 20, **dadurch gekennzeichnet, dass** das Mittelteil (5) durch plastisches Verformen, insbesondere durch Erweitern mit dem Oberteil (1) und dem Unterteil (4) verbindbar ist, wobei im Inneren des Mittelteiles (5) zum Erweitern, insbesondere des Bereiches der Einkerbung (14.2) ein Stössel (18) einpressbar ist.

23. Ohrmarke nach Anspruch 22, **dadurch gekennzeichnet, dass** der Stössel (18) als Datenträger (7) ausgebildet ist.

24. Ohrmarke nach Anspruch 22 oder 23, **dadurch gekennzeichnet, dass** der Stössel (18) die Einstechspitze (16) nach dem Aufweiten des Endbereiches, insbesondere im Bereich der Einkerbung (14.2) des Mittelteiles (5) aus diesem herausdrückt.

25. Ohrmarke nach wenigstens einem der Ansprüche 1 bis 24, **dadurch gekennzeichnet, dass** durch Aufweiten des Mittelteiles (5) eine formschlüssige Verbindung zwischen dem Mittelteil (5), insbesondere dessen Einkerbungen (14.1, 14.2) mit dem Oberteil (1) und Unterteil (4) entsteht.

26. Ohrmarke nach wenigstens einem der Ansprüche 1 bis 25, **dadurch gekennzeichnet, dass** das Mittelteil (5) aus einem plastisch verformbaren Material hergestellt ist und durch Erweitern, beispielsweise mittels eines Stössels (18) ein Aussendurchmesser der Einkerbungen (14.1 und/oder 14.2) auf einen Durchmesser des aufgesteckten Oberteiles (1) und Unterteil (4) erweiterbar ist.
